# EUROPEAN PATENT SPECIFICATION

(11) **EP 4 553 794 B1**
(45) Date of publication and mention of the grant of the patent: **04.11.2026**
(21) Application number: 24785958.0
(22) Date of filing: 19.04.2024
(51) Int. Cl.: G06V 20/58, G06T 7/73, G06T 7/254, G06V 10/764, G06V 20/40

(54) **DRIVING BLIND SPOT MONITORING METHOD, APPARATUS AND DEVICE, AND READABLE STORAGE MEDIUM**
VERFAHREN, VORRICHTUNG UND VORRICHTUNG ZUR ÜBERWACHUNG EINES FAHRBLINDPUNKTS UND LESBARES SPEICHERMEDIUM
PROCÉDÉ, APPAREIL ET DISPOSITIF DE SURVEILLANCE D'ANGLE MORT LORS DE LA CONDUITE, ET SUPPORT DE STOCKAGE LISIBLE

(30) Priority: 22.09.2023 CN 202311233136
(43) Date of publication of application: 14.05.2025
(73) Proprietor: Dongfeng Commercial Vehicle Co., Ltd., Shiyan, Hubei 442001 (CN)
(72) Inventor: XU, Xin, Shiyan Hubei 442001 (CN); LI, Yang, Shiyan Hubei 442001 (CN); WU, Peng, Shiyan Hubei 442001 (CN); FANG, Jiameng, Shiyan Hubei 442001 (CN); MAO, Zhujun, Shiyan Hubei 442001 (CN); LIU, Xing, Shiyan Hubei 442001 (CN)
(74) Representative: Gille Hrabal Partnerschaftsgesellschaft mbB Patentanwälte
(86) International application number: PCT/CN2024/088761
(87) International publication number: WO 2025/060413

(56) References cited:
- CN-A- 111 186 432
- CN-A- 113 642 453
- CN-A- 116 092 050
- CN-A- 117 315 619
- KR-A- 20110 075 927
- FUJIYOSHI H ET AL: "Road Observation and Information Providing System for Supporting Mobility of Pedestrian", COMPUTER VISION SYSTEMS, 2006 ICVS '06. IEEE INTERNATIONAL CONFERENCE ON NEW YORK, NY, USA 04-07 JAN. 2006, PISCATAWAY, NJ, USA,IEEE, 4 January 2006 (2006-01-04), pages 37 - 37, XP010899390, ISBN: 978-0-7695-2506-8, DOI: 10.1109/ICVS.2006.55
- BIAN WENKUN ET AL: "The measurement method based on the block adaptive double thresholds of motion target detection", 2015 IEEE INTERNATIONAL CONFERENCE ON MECHATRONICS AND AUTOMATION (ICMA), IEEE, 2 August 2015 (2015-08-02), pages 82 - 86, XP033216369, ISBN: 978-1-4799-7097-1, [retrieved on 20150902], DOI: 10.1109/ICMA.2015.7237461
- YIHUAN ZHAO, ZULIN WANG: "Detecting moving objects by background difference and frame-difference", MIPPR 2007 - AUTOMATIC TARGET RECOGNITION AND IMAGE ANALYSIS; AND MULTISPECTRAL IMAGE ACQUISITION, SPIE, vol. 6786, 15 November 2007 (2007-11-15), PO BOX 10 BELLINGHAM WA 98227-0010 USA, pages 67860R-1 - 67860R-6, XP040248938

## Description

### Field of the Invention

The present application relates to the field of vehicle warning technology, and in particular to a driving blind area monitoring method, apparatus, and device, and a readable storage medium.

### Background of the Invention

Driving blind areas refer to areas that the driver cannot directly see or observe while driving. These areas are typically located on the sides and rear of the vehicle and are often prone to accidents. Driving blind area monitoring is an important part of the assisted driving function, which can help the driver monitor obstacles in the driving blind areas, thereby reducing the potential dangers caused by the obstacles. The current driving blind area monitoring method adopts a feature matching algorithm to identify the obstacles from the video data collected by the camera. The feature matching algorithm needs to be trained on a model to form a feature database before use, and during use, due to the limitations of the feature database, the types of obstacles that can be identified are limited, which makes the driving blind area monitoring method prone to missed detections.

Prior art systems are disclosed in the following three references: FUJIYOSHI H ET AL: "Road Observation and Information Providing System for Supporting Mobility of Pedestrian" (COMPUTER VISION SYSTEMS, 2006 ICVS '06. IEEE INTERNATIONAL CONFERENCE ON NEW YORK, NY, USA 04-07 JAN. 2006, PISCATAWAY, NJ, USA,IEEE, 4 January 2006 (2006-01-04), pages 37 - 37, XP010899390, ISBN: 978-0-7695-2506-8, DOI: 10.1109/ICVS.2006.55), BIAN WENKUN ET AL: "The measurement method based on the block adaptive double thresholds of motion target detection" (2015 IEEE INTERNATIONAL CONFERENCE ON MECHATRONICS AND AUTOMATION (ICMA), IEEE, 2 August 2015 (2015-08-02), pages 82 - 86, XP033216369, ISBN: 978-1-4799-7097-1, [retrieved on 20150902]), and YIHUAN ZHAO, ZULIN WANG: "Detecting moving objects by background difference and frame-difference" (MIPPR 2007 - AUTOMATIC TARGET RECOGNITION AND IMAGE ANALYSIS; AND MULTISPECTRAL IMAGE ACQUISITION, SPIE, vol. 6786, 15 November 2007 (2007-11-15), PO BOX 10 BELLINGHAM WA 98227-0010 USA, pages 67860R-1 - 67860R-6, XP040248938).

### Summary of the Invention

The present application provides a driving blind area monitoring method according to claim 1, an apparatus according to claim 6, and a device of claim 7 , and a readable storage medium of claim 8, which can solve the technical problem in the prior art that the driving blind area monitoring method is prone to missed detections.

In a first aspect, the embodiment of the present application provides a driving blind area monitoring method, and the driving blind area monitoring method comprises the following steps:
determining a background area and an obstacle monitoring area from an area shot by a target camera, wherein the background area comprises the obstacle monitoring area;
preprocessing video data collected by the target camera to obtain target video data;
determining a target image set from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value;
aiming at each pixel point of the obstacle monitoring area, taking a grayscale average value of the same pixel point in the target image set as a grayscale standard value of the pixel point; and
outputting an obstacle recognition result in the obstacle monitoring area according to a difference between grayscale values of all the pixel points in the obstacle monitoring area in the subsequent images of the target image set and corresponding grayscale standard values.

Further, in one embodiment, the step of determining a target image set from the target video data comprises:
obtaining N consecutive frames of images from the target video data;
calculating the grayscale change reference value of the N frames of images according to a first formula set, wherein the first formula set is: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
*fₖ*(*i, j*) is the grayscale value of the pixel point (*i,j*) in the k-th frame image, *T_{f}* is a grayscale difference threshold value of the same pixel point in the background area of two adjacent frames of images, *Aₖ*(*i,j*) is a grayscale difference two-dimensional value of the pixel point (*i*,*j*) between the k-th frame image and the (k-1)-th frame image, D is the background area, *Aₖ* is the grayscale change quantization value between the k-th frame image and the (k-1)-th frame image, and A is the grayscale change reference value; and
determining the N frames of images as the target image set if the grayscale change reference value of the N frames of images is less than the grayscale change threshold value.

Further according to the invention, the step of outputting an obstacle recognition result in the obstacle monitoring area according to a difference between grayscale values of all the pixel points in the obstacle monitoring area in the subsequent images of the target image set and corresponding grayscale standard values comprises:
obtaining L consecutive frames of images from the subsequent images of the target image set;
calculating a first difference reference value of the L frames of images according to a second formula set, wherein the second formula set is: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j*) is the grayscale value of the pixel point (*i,j*) in the k-th frame image, *R*(*i,j*) is the grayscale standard value of the pixel point (*i,j*)*, T_{b}* is a grayscale difference threshold value between the grayscale value and the grayscale standard value of the same pixel point in the obstacle monitoring area, *Bₖ*(*i, j*) is a grayscale difference two-dimensional value of the pixel point (*i,j*) in the k-th frame image based on *T_{b},* d is the obstacle monitoring area, *Bₖ* is a sum of the grayscale difference two-dimensional values of all the pixel points in the obstacle monitoring area of the k-th frame image, and B is a first difference reference value;
determining that there is no obstacle in the obstacle monitoring area if the first difference reference value of the L frames of images is less than a first difference threshold value; and
determining that there is an obstacle in the obstacle monitoring area if the first difference reference value of the L frames of images is greater than or equal to the first difference threshold.

Further according to the invention, after the step of determining a target image set from the target video data, it further comprises:
aiming at each pixel point in the background area except the obstacle monitoring area, taking the average grayscale value of the same pixel point in the N frames of images as the grayscale standard value of the pixel point;
after the step of determining that there is no obstacle in the obstacle monitoring area, further comprising:
   calculating a second difference reference value of the L frames of images according to a third formula set, wherein the third formula set is: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
   *fₖ*(*i, j*) is the grayscale value of the pixel point (*i,j*) in the k-th frame image, *R*(*i,j*) is the grayscale standard value of the pixel point (*i,j*)*, T_{L}* is the grayscale difference threshold value between the grayscale value and the grayscale standard value of the same pixel point in the background area, *Cₖ*(*i, j*) is the grayscale difference two-dimensional value of the pixel point (*i,j*) in the k-th frame image based on *T_{L},* D is the background area, *Cₖ* is the sum of the grayscale difference two-dimensional values of all the pixel points in the background area of the k-th frame image, and C is a second difference reference value;
   if the second difference reference value of the L frames of images is greater than or equal to a second difference threshold value, taking a first frame of the L frames of images as a starting frame, obtaining N consecutive frames of images from the target video data, and calculating the grayscale change reference value of the N frames of images, wherein N is equal to the number of image frames in the target image set; and
   if the grayscale change reference value of the N frames of images is less than the grayscale change threshold value, taking the N frames of images as a new target image set, and updating the grayscale standard value based on the new target image set.

Further, in one embodiment, after the step of aiming at each pixel point of the obstacle monitoring area, taking a grayscale average value of the same pixel point in the target image set as a grayscale standard value of the pixel point, it further comprises:
obtaining N consecutive frames of images from the target video data regularly according to an update cycle, and calculating the grayscale change reference value of the N frames of images, wherein N is equal to the number of image frames in the target image set; and
if the grayscale change reference value of the N frames of images is less than the grayscale change threshold value, taking the N frames of images as a new target image set, and updating the grayscale standard value based on the new target image set.

Further, in one embodiment, before the step of determining a background area and an obstacle monitoring area from an area shot by a target camera, it further comprises:
determining a lane wherein a vehicle is located based on a vehicle positioning system and a high-precision map; and
if there is an adjacent lane on a left and/or right side of the lane where the vehicle is located, taking the camera on a corresponding side of the vehicle as the target camera.

Further, in one embodiment, the background area comprises all drivable areas in the area shot by the target camera, and the obstacle monitoring area is located in the adjacent lane area corresponding to the target camera.

In a second aspect, the embodiment of the present application further provides a driving blind area monitoring apparatus, and the driving blind area monitoring apparatus comprises:
an area determination module, which is configured to determine a background area and an obstacle monitoring area from an area shot by a target camera, wherein the background area comprises the obstacle monitoring area;
a preprocessing module, which is configured to preprocess video data collected by the target camera to obtain target video data;
an image determination module, which is configured to determine a target image set from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value;
a standard value calculation module, which is configured to, aiming at each pixel point of the obstacle monitoring area, take a grayscale average value of the same pixel point in the target image set as a grayscale standard value of the pixel point; and
an obstacle recognition module, which is configured to output an obstacle recognition result in the obstacle monitoring area according to a difference between grayscale values of all the pixel points in the obstacle monitoring area in the subsequent images of the target image set and corresponding grayscale standard values.

In a third aspect, the present application further provides a driving blind area monitoring device, and the driving blind area monitoring device comprises: a processor, a memory, and a driving blind area monitoring program that is stored on the memory and can be executed by the processor, wherein when the driving blind area monitoring program is executed by the processor, the steps of the above-mentioned driving blind area monitoring method are realized.

In a fourth aspect, the present application further provides a readable storage medium, and the readable storage medium comprises: a driving blind area monitoring program stored on the readable storage medium, wherein when the driving blind area monitoring program is executed by a processor, the steps of the above-mentioned driving blind area monitoring method are realized.

The present application obtains the target image set through analyzing the inter-frame grayscale change in the background area of the target video data, calculates the grayscale standard value based on the target image set, and outputs the obstacle recognition result in the obstacle monitoring area according to the difference between the grayscale values of all the pixel points in the obstacle monitoring area in the subsequent images of the target image set and the corresponding grayscale standard values. The present application does not rely on feature matching and is not limited by the feature database, thereby reducing missed detections. In addition, the present application does not require model training before use, and has lower requirements for computing power and processing speed during use, which helps to reduce implementation costs.

### Brief Description of the Drawings

Fig. 1 is a flow chart of a driving blind area monitoring method in one embodiment of the present application;
Fig. 2 is a flow chart of obstacle recognition and road surface fluctuation recognition in one embodiment of the present application;
Fig. 3 is a flow chart for attempting to update a grayscale standard value in one embodiment of the present application;
Fig. 4 is a functional module diagram of a driving blind area monitoring apparatus in one embodiment of the present application;
Fig. 5 is a hardware structure diagram of a driving blind area monitoring device involved in the embodiment of the present application.

### Detailed Description of the Embodiments

In order to make those skilled in the art to better understand the present application, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

The terms "comprising" and "having" as well as any variations thereof in the specification, claims and figures of the present application are intended to cover non-exclusive inclusion. For example, a process, method, system, product or device comprising a series of steps or units is not limited to the listed steps or units, but may optionally comprise unlisted steps or units, or may optionally comprise other steps or units inherent to these processes, methods, products, or devices. The terms such as "first", "second" and "third" are used to distinguish between different objects, etc., and do not represent an order of precedence or limit the "first", "second" and "third" to different types.

In the description of the embodiments of the present application, the terms "exemplary", "such as" or "for example" are used to indicate examples, illustrations or explanations. Any embodiment or design described as "exemplary", "such as" or "for example" in the embodiments of the present application should not be interpreted as being more preferred or advantageous compared to other embodiments or designs. Rather, the use of terms such as "exemplary", "such as" or "for example" are intended to present the relevant concepts in a concrete manner.

In the description of the embodiments of the present application, unless otherwise specified, the symbol "/" denotes "or", for example, A/B can represent either A or B; the "and/or" in the text is merely a description of the association relationship of associated objects, indicating that three relationships are possible. For example, A and/or B can represent three situations: A exists alone, A and B exist at the same time, and B exists alone. In addition, in the description of the embodiments of the present application, "a plurality of" refers to two or more than two.

In some processes described in the embodiments of the present application, a plurality of operations or steps are comprised in a specific order, but it should be understood that these operations or steps can not be executed in the order in which they appear in the embodiments of the present application or can be executed in parallel. The serial numbers of the operations are only used to distinguish between different operations, and the serial numbers themselves do not represent any execution order. Additionally, these processes can comprise more or fewer operations, and these operations or steps can not only be performed sequentially or in parallel but also can be combined in various ways.

In order to make the purpose, technical solution and advantages of the present application clearer, the implementation method of the present application will be further described in detail below with reference to the drawings.

In the first aspect, the embodiment of the present application provides a driving blind area monitoring method.

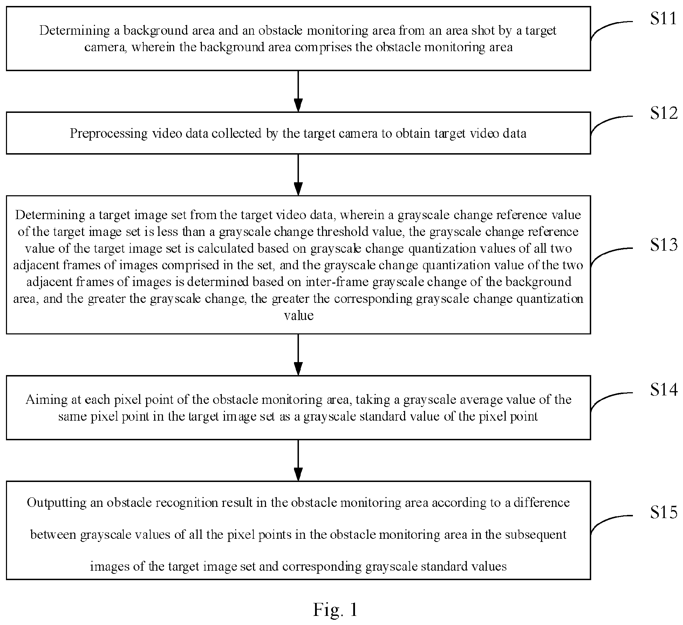

Fig. 1 shows a flow chart of a driving blind area monitoring method in one embodiment of the present application.

As shown in Fig. 1, in one embodiment, the driving blind area monitoring method comprises the following steps:
S11: A background area and an obstacle monitoring area are determined from an area shot by a target camera, wherein the background area comprises the obstacle monitoring area.

The driving blind area detection system typically monitors the area around the vehicle by means of sensors, cameras or radar. When other vehicles or objects enter the driving blind area, the system will sound an alarm to alert the driver. The vision-based driving blind area warning system currently on the market comprises the following steps:
1. Camera Installation: First, the camera needs to be installed at a suitable location on the side and rear of the vehicle. Generally speaking, the camera is installed either below the rearview mirror of the vehicle or on the side of the body of vehicle.
2. Camera Angle Adjustment: The angle of the camera is adjusted to ensure it can cover the blind area of the vehicle. It is necessary to ensure that the camera can clearly capture the situation on the sides and rear.
3. Camera Connection: The camera is connected to the electrical system of the vehicle. The camera is usually connected to the display screen or navigation system in the vehicle.
4. Image Processing and Analysis: The camera captures images around the vehicle in real time. These images are then processed by image processing and analysis algorithms to detect and identify obstacles in the driving blind areas.
5. Blind Area Alarm: Once the camera detects an obstacle in the blind area, the system will trigger the alarm mechanism to remind the driver through the display screen, sound or vibration on the vehicle.
6. Visual Display: The display screens on some vehicles will show the images captured by the camera to help the driver understand the blind area more intuitively.

It should be noted that the performance and quality of the camera have a great impact on the accuracy and reliability of blind area monitoring. A high-quality camera provides clear, stable images and works well in a variety of lighting conditions.

The target camera in this embodiment belongs to the above-mentioned camera for blind area monitoring. It can be understood that the area shot by the target camera comprises more than just the obstacle monitoring area that needs to be paid attention to during driving. Therefore, it is necessary to determine the obstacle monitoring area from the area shot by the target camera, and its demarcation rules are determined based on vehicle characteristics and driving safety requirements. The background area is an area comprising the obstacle monitoring area, and also comprises other areas adjacent to the obstacle monitoring area, and is configured to represent the overall situation of the road surface where the obstacle monitoring area is located.

It should be noted that it is not necessary to monitor the video data from the two cameras on the left and right sides of the vehicle throughout the driving process. For example, if there is no obstacle risk on one side of the vehicle, there is no need to monitor the video data from the camera on that side. In this embodiment, the target camera refers to a camera that needs to monitor the video data.

Further, in one embodiment, before the step of determining a background area and an obstacle monitoring area from an area shot by a target camera, it further comprises:
determining a lane wherein a vehicle is located based on a vehicle positioning system and a high-precision map; and
if there is an adjacent lane on a left and/or right side of the lane where the vehicle is located, taking the camera on a corresponding side of the vehicle as the target camera.

In this embodiment, the target camera is determined according to the lane condition where the vehicle is located. For example, when the vehicle is in the leftmost lane, there is no risk of obstacles on the left side and has no need to monitor the video data of the left camera. There is an adjacent lane on the right side and has obstacle risk, so it is necessary to monitor the video data of the right camera, and the right camera serves as the target camera.

Further, in one embodiment, the background area comprises all drivable areas in the area shot by the target camera, and the obstacle monitoring area is located in the adjacent lane area corresponding to the target camera.

In this embodiment, the background area is the entire road area (excluding trees, guardrails, etc.) in the area shot by the target camera, and the obstacle monitoring area is a part of the adjacent lane area corresponding to the target camera. For example, there are three lanes on the left side of the vehicle, all of which are comprised in the shooting area of the target camera. Then, the three lane areas are all comprised in the background area, and only part of the left adjacent lane area is taken as the obstacle monitoring area.

Optionally, the drivable area involved in the background area can be determined based on high-precision map data, or based on visual segmentation algorithms for edge detection.

Optionally, the obstacle monitoring area is a rectangular area, the length of which is determined by the vehicle characteristics and driving safety requirements, and the width of which is determined by the width of the adjacent lane.

S12: Video data collected by the target camera is preprocessed to obtain target video data.

In this embodiment, the preprocessing process mainly comprises time filtering and space filtering. The purpose of time filtering is to obtain continuous video frames, and the purpose of space filtering is to eliminate camera noise and environmental noise such as rain and snow. Optionally, the preprocessing process can also convert the video data into a form that is easy to process by subsequent algorithms, such as a grayscale matrix form.

S13. A target image set is determined from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value.

In this embodiment, the grayscale change quantization value is determined based on the inter-frame grayscale change of the background area of two adjacent frames of images, and the grayscale change reference value of a set of continuous images is determined based on the grayscale change quantization values of all the two adjacent frames of images of this set of images, and the image set whose grayscale change reference value is less than the grayscale change threshold value is taken as the target image set.

It can be understood that, assuming that there are no obstacles and only the road surface in the background area of the continuous multiple-frames of images shot by the camera over a period of time, and the appearance of the road surface during this period is basically stable, then the grayscale of the background area in these images is also basically stable. The grayscale change reference value of this embodiment is configured to reflect the grayscale change of the background area of the continuous multiple-frames of images. The smaller the grayscale change reference value, the smaller the grayscale change and the lower the possibility of the existence of an obstacle. The larger the grayscale change reference value, the larger the grayscale change and the higher the possibility of the existence of an obstacle. The grayscale change threshold value is configured to determine whether there are obstacles in the background area. The target image set is a set of continuous multi-frame images that are considered to have no obstacles in the background area and are screened from the target video data based on the above judgment logic.

Further, in one embodiment, the step of determining a target image set from the target video data comprises:
obtaining N consecutive frames of images from the target video data;
calculating the grayscale change reference value of the N frames of images according to a first formula set, wherein the first formula set is: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
*fₖ*(*i,j*) is the grayscale value of the pixel point (*i,j*) in the k-th frame image, *T_{f}* is a grayscale difference threshold value of the same pixel point in the background area of two adjacent frames of images, *Aₖ*(*i, j*) is a grayscale difference two-dimensional value of the pixel point (*i*,*j*) between the k-th frame image and the (k-1)-th frame image, D is the background area, *Aₖ* is the grayscale change quantization value between the k-th frame image and the (k-1)-th frame image, and A is the grayscale change reference value; and
determining the N frames of images as the target image set if the grayscale change reference value of the N frames of images is less than the grayscale change threshold value.

In this embodiment, at the initial stage of vehicle startup, when the target image set has not been successfully acquired, if the grayscale change reference value of the N frames of images is greater than or equal to the grayscale change threshold value, the first frame of the N frames of images is discarded, the next frame of the Nth frame image is acquired, and the grayscale change reference value of the new N frames of images is calculated until the target image set is successfully acquired. That is, a sliding window with a sliding step of 1 frame and a size of N frames is created to continuously acquire N consecutive frames of images until the target image set is successfully acquired.

S14: Aiming at each pixel point of the obstacle monitoring area, a grayscale average value of the same pixel point in the target image set is taken as a grayscale standard value of the pixel point.

In this embodiment, the grayscale standard value is configured to represent the grayscale value when there is no obstacle in the obstacle monitoring area. The appropriate expansion of the background area relative to the obstacle monitoring area helps to improve the reliability of the grayscale standard value. Assuming that the target image set is determined and the grayscale standard value is calculated directly according to the grayscale change in the obstacle monitoring area, it is possible that an obstacle may be identified as a stable road surface.

Specifically, the grayscale standard value is calculated according to the following formula: $R \left(i, j\right) = \frac{1}{N} {\sum }_{k = 1}^{N} {f}_{k} \left(i, j\right)$

*R*(*i,j*) is the grayscale standard value of the pixel point (*i*,*j*), and *fₖ*(*i,j*) is the grayscale value of the pixel point (*i*,*j*)in the k-th frame image.

In the initial stage of vehicle startup, if the target image set has not been successfully acquired, the grayscale standard value cannot be calculated, and the subsequent obstacle recognition operation cannot be performed. At this time, obstacle identification can be performed with the help of other detection means, such as radar detection, or adopting a preset grayscale standard value. After the target image set has been successfully acquired and the grayscale standard value has been calculated, the update of the two will also be involved, which will be elaborated in detail later.

S15: An obstacle recognition result in the obstacle monitoring area is output according to a difference between grayscale values of all the pixel points in the obstacle monitoring area in the subsequent images of the target image set and corresponding grayscale standard values.

In this embodiment, the greater the difference between the grayscale values of all the pixel points in the obstacle monitoring area in the subsequent images and the corresponding grayscale standard values, the higher the possibility of the existence of an obstacle, and the smaller the difference, the lower the possibility of the existence of an obstacle.

Further, in one embodiment, the step of outputting an obstacle recognition result in the obstacle monitoring area according to a difference between grayscale values of all the pixel points in the obstacle monitoring area in the subsequent images of the target image set and corresponding grayscale standard values comprises:
obtaining L consecutive frames of images from the subsequent images of the target image set;
calculating a first difference reference value of the L frames of images according to a second formula set, wherein the second formula set is: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j*) is the grayscale value of the pixel point (*i,j*) in the k-th frame image, *R*(*i,j*) is the grayscale standard value of the pixel point (*i,j*)*, T_{b}* is a grayscale difference threshold value between the grayscale value and the grayscale standard value of the same pixel point in the obstacle monitoring area, *Bₖ*(*i, j*) is a grayscale difference two-dimensional value of the pixel point (*i,j*) in the k-th frame image based on *T_{b},* d is the obstacle monitoring area, *Bₖ* is a sum of the grayscale difference two-dimensional values of all the pixel points in the obstacle monitoring area of the k-th frame image, and B is a first difference reference value;
determining that there is no obstacle in the obstacle monitoring area if the first difference reference value of the L frames of images is less than a first difference threshold value; and
determining that there is an obstacle in the obstacle monitoring area if the first difference reference value of the L frames of images is greater than or equal to the first difference threshold.

In this embodiment, the first difference reference value is configured to reflect the overall average difference between the grayscale values of all the pixel points in the obstacle monitoring area of L consecutive frames of images and the corresponding grayscale standard values. The first difference threshold value is configured to determine whether there is an obstacle in the background area and has a lower missed detection rate than monitoring each image individually.

Therefore, this embodiment obtains the target image set through analyzing the inter-frame grayscale change in the background area of the target video data, calculates the grayscale standard value based on the target image set, and outputs the obstacle recognition result in the obstacle monitoring area according to the difference between the grayscale values of all the pixel points in the obstacle monitoring area in the subsequent images of the target image set and the corresponding grayscale standard values. This embodiment does not rely on feature matching and is not limited by the feature database, thereby reducing missed detections. In addition, this embodiment does not require to perform model training before use, and has lower requirements for computing power and processing speed during use, which helps to reduce implementation costs.

It should be noted that the accuracy of the obstacle recognition algorithm in the present application depends on the stability of the road surface appearance. For scenes where the road surface appearance changes frequently, the accuracy thereof is difficult to guarantee. The highway area is a typical area with a stable road surface appearance, and the present application has a good effect on the highway area.

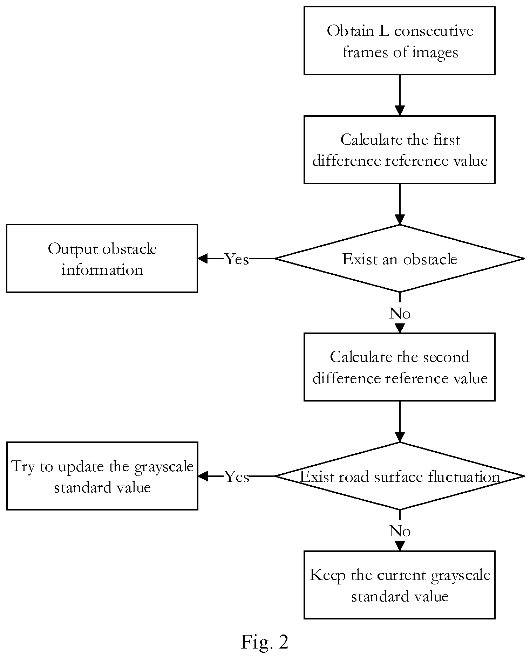

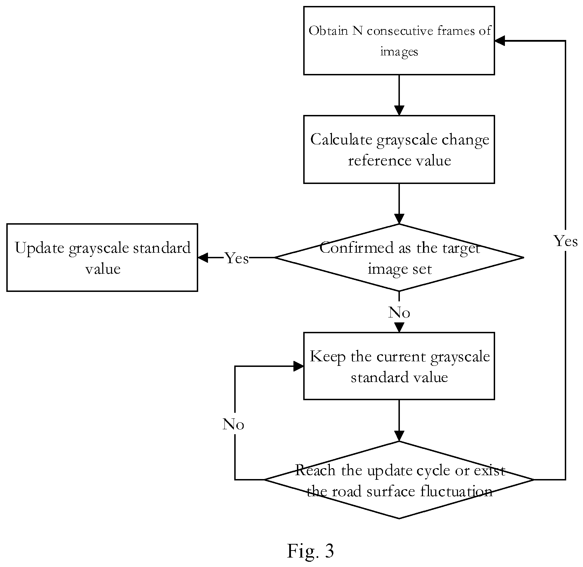

Fig. 2 shows a flow chart of obstacle recognition and road surface fluctuation recognition in one embodiment of the present application. Fig. 3 shows a flow chart for attempting to update a grayscale standard value in one embodiment of the present application.

Further, in one embodiment, after the step of determining a target image set from the target video data, it further comprises:
aiming at each pixel point in the background area except the obstacle monitoring area, taking the average grayscale value of the same pixel point in the N frames of images as the grayscale standard value of the pixel point;
after the step of determining that there is no obstacle in the obstacle monitoring area, further comprising:
   calculating a second difference reference value of the L frames of images according to a third formula set, wherein the third formula set is: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
   *fₖ*(*i,j*) is the grayscale value of the pixel point (*i,j*) in the k-th frame image, *R*(*i,j*) is the grayscale standard value of the pixel point (*i,j*)*, T_{L}* is the grayscale difference threshold value between the grayscale value and the grayscale standard value of the same pixel point in the background area, *Cₖ*(*i, j*) is the grayscale difference two-dimensional value of the pixel point (*i,j*) in the k-th frame image based on *T_{L},* D is the background area, *Cₖ* is the sum of the grayscale difference two-dimensional values of all the pixel points in the background area of the k-th frame image, and C is a second difference reference value;
   if the second difference reference value of the L frames of images is greater than or equal to a second difference threshold value, taking a first frame of the L frames of images as a starting frame, obtaining N consecutive frames of images from the target video data, and calculating the grayscale change reference value of the N frames of images, wherein N is equal to the number of image frames in the target image set; and
   if the grayscale change reference value of the N frames of images is less than the grayscale change threshold value, taking the N frames of images as a new target image set, and updating the grayscale standard value based on the new target image set.

This embodiment provides a method for updating a target image set and a grayscale standard value. As shown in Fig. 2 and Fig. 3, after calculating the first difference reference value of L frames of images and determining that no obstacle exists, the second difference reference value of the L frames of images is further calculated. The second difference reference value is configured to reflect the overall average difference between the grayscale of all the pixel points in the background area of the continuous L frames of images and the corresponding grayscale standard values. The second difference threshold value is configured to define whether there is road surface fluctuation in the background area. For example, the overall color of the road surface in the image changes due to factors such as road surface material or external lighting, or it is possible that there are obstacles in areas outside the obstacle monitoring area. When it is determined that there is the road surface fluctuation according to the second difference reference value, an attempt is made to update the target image set and the grayscale standard value.

It should be noted that when it is determined that there is the road surface fluctuation, only one attempt operation is performed, that is, N consecutive frames of images are obtained to calculate the grayscale change reference value. If the grayscale change reference value meets the requirements, the target image set and the grayscale standard value are updated, otherwise no update is performed.

Further, in one embodiment, after the step of aiming at each pixel point of the obstacle monitoring area, taking a grayscale average value of the same pixel point in the target image set as a grayscale standard value of the pixel point, it further comprises:
obtaining N consecutive frames of images from the target video data regularly according to an update cycle, and calculating the grayscale change reference value of the N frames of images, wherein N is equal to the number of image frames in the target image set; and
if the grayscale change reference value of the N frames of images is less than the grayscale change threshold value, taking the N frames of images as a new target image set, and updating the grayscale standard value based on the new target image set.

This embodiment provides another method for updating the target image set and the grayscale standard value. As shown in Fig. 3, when the update cycle is reached, a trial operation is performed, that is, N consecutive frames of images are obtained to calculate the grayscale change reference value. If the grayscale change reference value meets the requirements, the target image set and the grayscale standard value are updated, otherwise no update is performed. For example, the vehicle attempts to update every 30 minutes of driving.

It should be noted that the above two updating methods can be used in combination. The first real-time fluctuation update strategy ensures that the grayscale standard value is updated in time when the road surface changes to a certain extent, and the second periodic update strategy ensures that a certain update frequency can be guaranteed even when the road surface changes slightly, thereby comprehensively improving the reliability of the grayscale standard value and ensuring the accuracy of the obstacle recognition algorithm.

In the second aspect, the embodiment of the present application further provides a driving blind area monitoring apparatus.

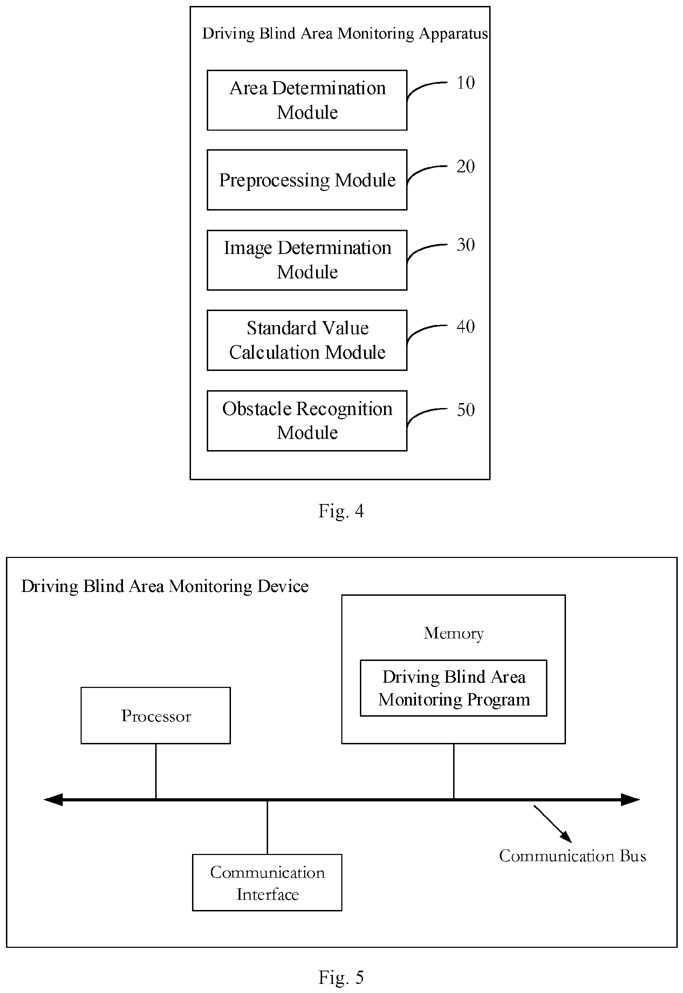

Fig. 4 shows a functional module diagram of a driving blind area monitoring apparatus in one embodiment of the present application.

As shown in Fig. 4, in one embodiment, the driving blind area monitoring apparatus comprises:
an area determination module 10, which is configured to determine a background area and an obstacle monitoring area from an area shot by a target camera, wherein the background area comprises the obstacle monitoring area;
a preprocessing module 20, which is configured to preprocess video data collected by the target camera to obtain target video data;
an image determination module 30, which is configured to determine a target image set from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value;
a standard value calculation module 40, which is configured to, aiming at each pixel point of the obstacle monitoring area, take a grayscale average value of the same pixel point in the target image set as a grayscale standard value of the pixel point; and
an obstacle recognition module 50, which is configured to output an obstacle recognition result in the obstacle monitoring area according to a difference between grayscale values of all the pixel points in the obstacle monitoring area in the subsequent images of the target image set and corresponding grayscale standard values.

Further, in one embodiment, the image determination module 30 is configured to:
obtain N consecutive frames of images from the target video data;
calculate the grayscale change reference value of the N frames of images according to a first formula set, wherein the first formula set is: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
*fₖ*(*i,j*) is the grayscale value of the pixel point (*i,j*) in the k-th frame image, *T_{f}* is a grayscale difference threshold value of the same pixel point in the background area of two adjacent frames of images, *Aₖ*(*i, j*) is a grayscale difference two-dimensional value of the pixel point (*i*,*j*) between the k-th frame image and the (k-1)-th frame image, D is the background area, *Aₖ* is the grayscale change quantization value between the k-th frame image and the (k-1)-th frame image, and A is the grayscale change reference value; and
determine the N frames of images as the target image set if the grayscale change reference value of the N frames of images is less than the grayscale change threshold value.

Further, in one embodiment, the obstacle recognition module 50 is configured to:
obtain L consecutive frames of images from the subsequent images of the target image set;
calculate a first difference reference value of the L frames of images according to a second formula set, wherein the second formula set is: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j*) is the grayscale value of the pixel point (*i,j*) in the k-th frame image, *R*(*i,j*) is the grayscale standard value of the pixel point (*i,j*)*, T_{b}* is a grayscale difference threshold value between the grayscale value and the grayscale standard value of the same pixel point in the obstacle monitoring area, *Bₖ*(*i,j*) is a grayscale difference two-dimensional value of the pixel point (*i,j*) in the k-th frame image based on *T_{b},* d is the obstacle monitoring area, *Bₖ* is a sum of the grayscale difference two-dimensional values of all the pixel points in the obstacle monitoring area of the k-th frame image, and B is a first difference reference value;
determine that there is no obstacle in the obstacle monitoring area if the first difference reference value of the L frames of images is less than a first difference threshold value; and
determine that there is an obstacle in the obstacle monitoring area if the first difference reference value of the L frames of images is greater than or equal to the first difference threshold.

Further, in one embodiment, the standard value calculation module 40 is further configured to:
aiming at each pixel point in the background area except the obstacle monitoring area, take the average grayscale value of the same pixel point in the N frames of images as the grayscale standard value of the pixel point;
the driving blind area monitoring apparatus further comprises an update module, which is configured to:
   calculate a second difference reference value of the L frames of images according to a third formula set, wherein the third formula set is: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
   *fₖ*(*i,j*) is the grayscale value of the pixel point (*i,j*) in the k-th frame image, *R*(*i,j*) is the grayscale standard value of the pixel point (*i,j*)*, T_{L}* is the grayscale difference threshold value between the grayscale value and the grayscale standard value of the same pixel point in the background area, *Cₖ*(*i, j*) is the grayscale difference two-dimensional value of the pixel point (*i*,*j*) in the k-th frame image based on *T_{L},* D is the background area, *Cₖ* is the sum of the grayscale difference two-dimensional values of all the pixel points in the background area of the k-th frame image, and C is a second difference reference value;
   if the second difference reference value of the L frames of images is greater than or equal to a second difference threshold value, take a first frame of the L frames of images as a starting frame, obtain N consecutive frames of images from the target video data, and calculate the grayscale change reference value of the N frames of images, wherein N is equal to the number of image frames in the target image set; and
   if the grayscale change reference value of the N frames of images is less than the grayscale change threshold value, take the N frames of images as a new target image set, and update the grayscale standard value based on the new target image set.

Further, in one embodiment, the driving blind area monitoring apparatus further comprises an update module, which is configured to:
obtain N consecutive frames of images from the target video data regularly according to an update cycle, and calculate the grayscale change reference value of the N frames of images, wherein N is equal to the number of image frames in the target image set; and
if the grayscale change reference value of the N frames of images is less than the grayscale change threshold value, take the N frames of images as a new target image set, and update the grayscale standard value based on the new target image set.

Further, in one embodiment, the driving blind area monitoring apparatus further comprises a camera determination module, which is configured to:
determine a lane wherein a vehicle is located based on a vehicle positioning system and a high-precision map; and
if there is an adjacent lane on a left and/or right side of the lane where the vehicle is located, take the camera on a corresponding side of the vehicle as the target camera.

Further, in one embodiment, the background area comprises all drivable areas in the area shot by the target camera, and the obstacle monitoring area is located in the adjacent lane area corresponding to the target camera.

The function implementation of each module in the driving blind area monitoring apparatus corresponds to the steps in the driving blind area monitoring method in the above embodiment, and the function and implementation process thereof will not be repeated herein.

In the third aspect, the embodiment of the present application provides a driving blind area monitoring device, and the driving blind area monitoring device can be a personal computer (PC), a laptop computer, a server, or other device with data processing capabilities.

Fig. 5 shows a hardware structure diagram of a driving blind area monitoring device involved in the embodiment of the present application.

As shown in Fig. 5, in the embodiment of the present application, the driving blind area monitoring device can comprise a processor, a memory, a communication interface, and a communication bus.

The communication bus can be of any type and is configured to interconnect the processor, the memory, and the communication interface.

The communication interface comprises input/output (I/O) interfaces, physical interfaces, and logical interfaces, etc. These interfaces are configured to realize the interconnection of the components inside the driving blind area monitoring device, and the interconnection between the driving blind area monitoring device and other devices (such as other computing devices or user devices). The physical interface can be an Ethernet interface, an optical fiber interface, an ATM interface, etc. The user device can be a display, a keyboard, etc.

The memory can be various types of storage media, such as random-access memory (RAM), read-only memory (ROM), non-volatile RAM (NVRAM), flash memory, optical storage, hard disk, programmable ROM (PROM), and electrically erasable PROM (EEPROM).

The processor can be a general-purpose processor, which can call the driving blind area monitoring program stored in the memory and execute the driving blind area monitoring method provided in the embodiment of the present application. For example, the general-purpose processor can be a central processing unit (CPU). For method executed when the driving blind area monitoring program is called, reference can be made to various embodiments of the driving blind area monitoring method in the present application, which will not be repeated herein.

Those skilled in the art can understand that the hardware structure shown in Fig. 5 does not constitute a limitation of the present application, and can comprise more or less components than those shown in Fig. 5, or combine some components, or arrange different components.

In the fourth aspect, the embodiment of the present application further provides a storage medium.

The readable storage medium of the present application stores the driving blind area monitoring program, wherein when the driving blind area monitoring program is executed by a processor, the steps of the above-mentioned driving blind area monitoring method are realized.

For method executed when the driving blind area monitoring program is executed, reference can be made to various embodiments of the driving blind area monitoring method in the present application, which will not be repeated herein.

It should be noted that the serial numbers of the above-mentioned embodiments of the present application are only for description and do not represent the advantages or disadvantages of the embodiments.

From the description of the above embodiments, those skilled in the art can clearly understand that the methods of the above embodiments can be implemented by means of software plus a necessary general hardware platform, and of course hardware can also be used, but in many cases the former is better implementation. Based on this understanding, the technical solutions of the present application, in essence, or the parts that make contributions to the prior art, can be embodied in the form of software products. The computer software products are stored in a storage medium (such as ROM/RAM, magnetic disk, optical disk) as described above, comprising several instructions to make a terminal device execute the methods described in each embodiment of the present application.

The above are only preferred embodiments of the present application, and are not intended to limit the protection scope of the present application.

## Claims

1. A driving blind area monitoring method, comprising the following steps:
determining a background area and an obstacle monitoring area from an area shot by a target camera, wherein the background area comprises the obstacle monitoring area;
preprocessing video data collected by the target camera to obtain target video data;
determining a target image set from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value;
aiming at each pixel point of the obstacle monitoring area, taking a grayscale average value of the same pixel point in the target image set as a grayscale standard value of the pixel point; and
outputting an obstacle recognition result in the obstacle monitoring area according to a difference between grayscale values of all the pixel points in the obstacle monitoring area in the subsequent images of the target image set and corresponding grayscale standard values;
wherein the step of outputting an obstacle recognition result in the obstacle monitoring area according to a difference between grayscale values of all the pixel points in the obstacle monitoring area in the subsequent images of the target image set and corresponding grayscale standard values comprises:
obtaining L consecutive frames of images from the subsequent images of the target image set;
calculating a first difference reference value of the L frames of images according to a second formula set, wherein the second formula set is: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i,j*) is the grayscale value of the pixel point (*i,j*) in the k-th frame image, *R*(*i,j*) is the grayscale standard value of the pixel point (*i,j*)*, T_{b}* is a grayscale difference threshold value between the grayscale value and the grayscale standard value of the same pixel point in the obstacle monitoring area, *Bₖ*(*i,j*) is a grayscale difference two-dimensional value of the pixel point (*i,j*) in the k-th frame image based on *T_{b},* d is the obstacle monitoring area, *Bₖ* is a sum of the grayscale difference two-dimensional values of all the pixel points in the obstacle monitoring area of the k-th frame image, and B is a first difference reference value;
determining that there is no obstacle in the obstacle monitoring area if the first difference reference value of the L frames of images is less than a first difference threshold value; and
determining that there is an obstacle in the obstacle monitoring area if the first difference reference value of the L frames of images is greater than or equal to the first difference threshold;
wherein after the step of determining a target image set from the target video data, it further comprises:
aiming at each pixel point in the background area except the obstacle monitoring area, taking the average grayscale value of the same pixel point in the N frames of images as the grayscale standard value of the pixel point;
after the step of determining that there is no obstacle in the obstacle monitoring area, further comprising:
calculating a second difference reference value of the L frames of images according to a third formula set, wherein the third formula set is: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
*fₖ*(*i,j)* is the grayscale value of the pixel point (*i*,*j*) in the k-th frame image, *R*(*i,j*) is the grayscale standard value of the pixel point (*i,j*)*, T_{L}* is the grayscale difference threshold value between the grayscale value and the grayscale standard value of the same pixel point in the background area, *Cₖ*(*i,j*) is the grayscale difference two-dimensional value of the pixel point (*i,j*) in the k-th frame image based on *T_{L},* D is the background area, *Cₖ* is the sum of the grayscale difference two-dimensional values of all the pixel points in the background area of the k-th frame image, and C is a second difference reference value;
if the second difference reference value of the L frames of images is greater than or equal to a second difference threshold value, taking a first frame of the L frames of images as a starting frame, obtaining N consecutive frames of images from the target video data, and calculating the grayscale change reference value of the N frames of images, wherein N is equal to the number of image frames in the target image set; and
if the grayscale change reference value of the N frames of images is less than the grayscale change threshold value, taking the N frames of images as a new target image set, and updating the grayscale standard value based on the new target image set.

2. The driving blind area monitoring method according to claim 1, wherein the step of determining a target image set from the target video data comprises:
obtaining N consecutive frames of images from the target video data;
calculating the grayscale change reference value of the N frames of images according to a first formula set, wherein the first formula set is: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
*fₖ*(*i, j*) is the grayscale value of the pixel point *(i,j)* in the k-th frame image, *T_{f}* is a grayscale difference threshold value of the same pixel point in the background area of two adjacent frames of images, *Aₖ*(*i, j*) is a grayscale difference two-dimensional value of the pixel point (*i*,*j*) between the k-th frame image and the (k-1)-th frame image, D is the background area, *Aₖ* is the grayscale change quantization value between the k-th frame image and the (k-1)-th frame image, and A is the grayscale change reference value; and
determining the N frames of images as the target image set if the grayscale change reference value of the N frames of images is less than the grayscale change threshold value.

3. The driving blind area monitoring method according to claim 1, wherein after the step of aiming at each pixel point of the obstacle monitoring area, taking a grayscale average value of the same pixel point in the target image set as a grayscale standard value of the pixel point, it further comprises:
obtaining N consecutive frames of images from the target video data regularly according to an update cycle, and calculating the grayscale change reference value of the N frames of images, wherein N is equal to the number of image frames in the target image set; and
if the grayscale change reference value of the N frames of images is less than the grayscale change threshold value, taking the N frames of images as a new target image set, and updating the grayscale standard value based on the new target image set.

4. The driving blind area monitoring method according to any one of claims 1 to 3, wherein before the step of determining a background area and an obstacle monitoring area from an area shot by a target camera, it further comprises:
determining a lane wherein a vehicle is located based on a vehicle positioning system and a high-precision map; and
if there is an adjacent lane on a left and/or right side of the lane where the vehicle is located, taking the camera on a corresponding side of the vehicle as the target camera.

5. The driving blind area monitoring method according to claim 4, wherein the background area comprises all drivable areas in the area shot by the target camera, and the obstacle monitoring area is located in the adjacent lane area corresponding to the target camera.

6. A driving blind area monitoring apparatus, comprising:
an area determination module, which is configured to determine a background area and an obstacle monitoring area from an area shot by a target camera, wherein the background area comprises the obstacle monitoring area;
a preprocessing module, which is configured to preprocess video data collected by the target camera to obtain target video data;
an image determination module, which is configured to determine a target image set from the target video data, wherein a grayscale change reference value of the target image set is less than a grayscale change threshold value, the grayscale change reference value of the target image set is calculated based on grayscale change quantization values of all two adjacent frames of images comprised in the set, and the grayscale change quantization value of the two adjacent frames of images is determined based on inter-frame grayscale change of the background area, and the greater the grayscale change, the greater the corresponding grayscale change quantization value;
a standard value calculation module, which is configured to, aiming at each pixel point of the obstacle monitoring area, take a grayscale average value of the same pixel point in the target image set as a grayscale standard value of the pixel point; and
an obstacle recognition module, which is configured to output an obstacle recognition result in the obstacle monitoring area according to a difference between grayscale values of all the pixel points in the obstacle monitoring area in the subsequent images of the target image set and corresponding grayscale standard values;
wherein the obstacle recognition module is configured to:
obtain L consecutive frames of images from the subsequent images of the target image set;
calculate a first difference reference value of the L frames of images according to a second formula set, wherein the second formula set is: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j*) is the grayscale value of the pixel point *(i,j)* in the k-th frame image, *R*(*i,j*) is the grayscale standard value of the pixel point (*i,j*), *T_{b}* is a grayscale difference threshold value between the grayscale value and the grayscale standard value of the same pixel point in the obstacle monitoring area, *Bₖ*(*i, j*) is a grayscale difference two-dimensional value of the pixel point (*i,j*) in the k-th frame image based on *T_{b},* d is the obstacle monitoring area, *Bₖ* is a sum of the grayscale difference two-dimensional values of all the pixel points in the obstacle monitoring area of the k-th frame image, and B is a first difference reference value;
determine that there is no obstacle in the obstacle monitoring area if the first difference reference value of the L frames of images is less than a first difference threshold value; and
determine that there is an obstacle in the obstacle monitoring area if the first difference reference value of the L frames of images is greater than or equal to the first difference threshold;
wherein the standard value calculation module is further configured to:
aiming at each pixel point in the background area except the obstacle monitoring area, take the average grayscale value of the same pixel point in the N frames of images as the grayscale standard value of the pixel point;
the driving blind area monitoring apparatus further comprises an update module, which is configured to:
calculate a second difference reference value of the L frames of images according to a third formula set, wherein the third formula set is: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
*fₖ*(*i,j*) is the grayscale value of the pixel point (*i,j*) in the k-th frame image, *R*(*i,j*) is the grayscale standard value of the pixel point (*i,j*)*, T_{L}* is the grayscale difference threshold value between the grayscale value and the grayscale standard value of the same pixel point in the background area, *Cₖ*(*i, j*) is the grayscale difference two-dimensional value of the pixel point (*i,j*) in the k-th frame image based on *T_{L},* D is the background area, *Cₖ* is the sum of the grayscale difference two-dimensional values of all the pixel points in the background area of the k-th frame image, and C is a second difference reference value;
if the second difference reference value of the L frames of images is greater than or equal to a second difference threshold value, take a first frame of the L frames of images as a starting frame, obtain N consecutive frames of images from the target video data, and calculate the grayscale change reference value of the N frames of images, wherein N is equal to the number of image frames in the target image set; and
if the grayscale change reference value of the N frames of images is less than the grayscale change threshold value, take the N frames of images as a new target image set, and update the grayscale standard value based on the new target image set.

7. A driving blind area monitoring device, comprising: a processor, a memory, and a driving blind area monitoring program that is stored on the memory and can be executed by the processor, wherein when the driving blind area monitoring program is executed by the processor, the steps of the driving blind area monitoring method according to any one of claims 1 to 5 are realized.

8. A readable storage medium, comprising: a driving blind area monitoring program stored on the readable storage medium, wherein when the driving blind area monitoring program is executed by a processor, the steps of the driving blind area monitoring method according to any one of claims 1 to 5 are realized.

## Patentansprüche

1. Ein Verfahren zur Überwachung eines Blindbereichs beim Fahren, umfassend die folgenden Schritte:
Bestimmen eines Hintergrundbereichs und eines Hindernisüberwachungsbereichs aus einem von einer Zielkamera aufgenommenen Bereich, wobei der Hintergrundbereich den Hindernisüberwachungsbereich umfasst;
Vorverarbeiten von durch die Zielkamera erfassten Videodaten, um Zielvideodaten zu erhalten;
Bestimmen eines Zielbildsatzes aus den Zielvideodaten, wobei ein Graustufenänderungs-Referenzwert des Zielbildsatzes kleiner als ein Graustufenänderungs-Schwellenwert ist, wobei der Graustufenänderungs-Referenzwert des Zielbildsatzes basierend auf Graustufenänderungs-Quantisierungswerten aller zwei benachbarten Bildframes, die in dem Satz enthalten sind, berechnet wird, und wobei der Graustufenänderungs-Quantisierungswert der zwei benachbarten Bildframes basierend auf einer Graustufenänderung zwischen Frames des Hintergrundbereichs bestimmt wird, und je größer die Graustufenänderung ist, desto größer ist der entsprechende Graustufenänderungs-Quantisierungswert;
zielend auf jeden Bildpunkt des Hindernisüberwachungsbereichs, Nehmen eines Graustufen-Durchschnittswerts desselben Bildpunkts in dem Zielbildsatz als einen Graustufen-Standardwert des Bildpunkts; und
Ausgeben eines Hinderniserkennungsergebnisses in dem Hindernisüberwachungsbereich gemäß einer Differenz zwischen Graustufenwerten aller Bildpunkte in dem Hindernisüberwachungsbereich in den nachfolgenden Bildern des Zielbildsatzes und entsprechenden Graustufen-Standardwerten;
wobei der Schritt des Ausgebens eines Hinderniserkennungsergebnisses in dem Hindernisüberwachungsbereich gemäß einer Differenz zwischen Graustufenwerten aller Bildpunkte in dem Hindernisüberwachungsbereich in den nachfolgenden Bildern des Zielbildsatzes und entsprechenden Graustufen-Standardwerten umfasst:
Erhalten von L aufeinanderfolgenden Bildframes aus den nachfolgenden Bildern des Zielbildsatzes;
Berechnen eines ersten Differenz-Referenzwerts der L Bildframes gemäß einem zweiten Formelsatz, wobei der zweite Formelsatz ist: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
wobei *fₖ*(*i, j*) der Graustufenwert des Bildpunkts *(i,j)* in dem k-ten Bildframe ist, *R*(*i, j*) der Graustufen-Standardwert des Bildpunkts *(i,j)* ist, *T_{b}* ein Graustufendifferenz-Schwellenwert zwischen dem Graustufenwert und dem Graustufen-Standardwert desselben Bildpunkts in dem Hindernisüberwachungsbereich ist, *Bₖ*(*i, j*) ein zweidimensionaler Graustufendifferenzwert des Bildpunkts *(i,j)* in dem k-ten Bildframe basierend auf *T_{b}* ist, d der Hindernisüberwachungsbereich ist, *Bₖ* eine Summe der zweidimensionalen Graustufendifferenzwerte aller Bildpunkte in dem Hindernisüberwachungsbereich des k-ten Bildframes ist, und B ein erster Differenz-Referenzwert ist;
Bestimmen, dass kein Hindernis in dem Hindernisüberwachungsbereich vorhanden ist, wenn der erste Differenz-Referenzwert der L Bildframes kleiner als ein erster Differenz-Schwellenwert ist; und
Bestimmen, dass ein Hindernis in dem Hindernisüberwachungsbereich vorhanden ist, wenn der erste Differenz-Referenzwert der L Bildframes größer als oder gleich dem ersten Differenz-Schwellenwert ist;
wobei nach dem Schritt des Bestimmens eines Zielbildsatzes aus den Zielvideodaten ferner umfasst ist:
zielend auf jeden Bildpunkt in dem Hintergrundbereich außer dem Hindernisüberwachungsbereich, Nehmen des Graustufen-Durchschnittswerts desselben Bildpunkts in den N Bildframes als den Graustufen-Standardwert des Bildpunkts;
nach dem Schritt des Bestimmens, dass kein Hindernis in dem Hindernisüberwachungsbereich vorhanden ist, ferner umfassend:
Berechnen eines zweiten Differenz-Referenzwerts der L Bildframes gemäß einem dritten Formelsatz, wobei der dritte Formelsatz ist: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
wobei *fₖ*(*i, j*) der Graustufenwert des Bildpunkts *(i,j)* in dem k-ten Bildframe ist, *R*(*i, j*) der Graustufen-Standardwert des Bildpunkts *(i,j)* ist, *T_{L}* der Graustufendifferenz-Schwellenwert zwischen dem Graustufenwert und dem Graustufen-Standardwert desselben Bildpunkts in dem Hintergrundbereich ist, *Cₖ*(*i, j*) der zweidimensionale Graustufendifferenzwert des Bildpunkts (i,j) in dem k-ten Bildframe basierend auf *T_{L}* ist, D der Hintergrundbereich ist, *Cₖ* die Summe der zweidimensionalen Graustufendifferenzwerte aller Bildpunkte in dem Hintergrundbereich des k-ten Bildframes ist, und C ein zweiter Differenz-Referenzwert ist;
wenn der zweite Differenz-Referenzwert der L Bildframes größer als oder gleich einem zweiten Differenz-Schwellenwert ist, Nehmen eines ersten Frames der L Bildframes als einen Startframe, Erhalten von N aufeinanderfolgenden Bildframes aus den Zielvideodaten und Berechnen des Graustufenänderungs-Referenzwerts der N Bildframes, wobei N gleich der Anzahl der Bildframes in dem Zielbildsatz ist; und
wenn der Graustufenänderungs-Referenzwert der N Bildframes kleiner als der Graustufenänderungs-Schwellenwert ist, Nehmen der N Bildframes als einen neuen Zielbildsatz und Aktualisieren des Graustufen-Standardwerts basierend auf dem neuen Zielbildsatz.

2. Das Verfahren zur Überwachung eines Blindbereichs beim Fahren nach Anspruch 1, wobei der Schritt des Bestimmens eines Zielbildsatzes aus den Zielvideodaten umfasst:
Erhalten von N aufeinanderfolgenden Bildframes aus den Zielvideodaten;
Berechnen des Graustufenänderungs-Referenzwerts der N Bildframes gemäß einem ersten Formelsatz, wobei der erste Formelsatz ist: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
wobei *fₖ*(*i, j*) der Graustufenwert des Bildpunkts (*i,j*) in dem k-ten Bildframe ist, *T_{f}* ein Graustufendifferenz-Schwellenwert desselben Bildpunkts in dem Hintergrundbereich von zwei benachbarten Bildframes ist, *Aₖ*(*i, j*) ein zweidimensionaler Graustufendifferenzwert des Bildpunkts *(i,j)* zwischen dem k-ten Bildframe und dem (k-1)-ten Bildframe ist, D der Hintergrundbereich ist, *Aₖ* der Graustufenänderungs-Quantisierungswert zwischen dem k-ten Bildframe und dem (k-1)-ten Bildframe ist, und A der Graustufenänderungs-Referenzwert ist; und
Bestimmen der N Bildframes als den Zielbildsatz, wenn der Graustufenänderungs-Referenzwert der N Bildframes kleiner als der Graustufenänderungs-Schwellenwert ist.

3. Das Verfahren zur Überwachung eines Blindbereichs beim Fahren nach Anspruch 1, wobei nach dem Schritt des, zielend auf jeden Bildpunkt des Hindernisüberwachungsbereichs, Nehmens eines Graustufen-Durchschnittswerts desselben Bildpunkts in dem Zielbildsatz als einen Graustufen-Standardwert des Bildpunkts, ferner umfasst ist:
regelmäßiges Erhalten von N aufeinanderfolgenden Bildframes aus den Zielvideodaten gemäß einem Aktualisierungszyklus und Berechnen des Graustufenänderungs-Referenzwerts der N Bildframes, wobei N gleich der Anzahl der Bildframes in dem Zielbildsatz ist; und
wenn der Graustufenänderungs-Referenzwert der N Bildframes kleiner als der Graustufenänderungs-Schwellenwert ist, Nehmen der N Bildframes als einen neuen Zielbildsatz und Aktualisieren des Graustufen-Standardwerts basierend auf dem neuen Zielbildsatz.

4. Das Verfahren zur Überwachung eines Blindbereichs beim Fahren nach einem der Ansprüche 1 bis 3, wobei vor dem Schritt des Bestimmens eines Hintergrundbereichs und eines Hindernisüberwachungsbereichs aus einem von einer Zielkamera aufgenommenen Bereich ferner umfasst ist:
Bestimmen einer Fahrspur, in der sich ein Fahrzeug befindet, basierend auf einem Fahrzeugpositionierungssystem und einer hochpräzisen Karte; und
wenn eine benachbarte Fahrspur auf einer linken und/oder rechten Seite der Fahrspur, in der sich das Fahrzeug befindet, vorhanden ist, Nehmen der Kamera auf einer entsprechenden Seite des Fahrzeugs als die Zielkamera.

5. Das Verfahren zur Überwachung eines Blindbereichs beim Fahren nach Anspruch 4, wobei der Hintergrundbereich alle befahrbaren Bereiche in dem von der Zielkamera aufgenommenen Bereich umfasst, und der Hindernisüberwachungsbereich sich in dem der Zielkamera entsprechenden benachbarten Fahrspurbereich befindet.

6. Eine Vorrichtung zur Überwachung eines Blindbereichs beim Fahren, umfassend:
ein Bereichsbestimmungsmodul, das dazu eingerichtet ist, einen Hintergrundbereich und einen Hindernisüberwachungsbereich aus einem von einer Zielkamera aufgenommenen Bereich zu bestimmen, wobei der Hintergrundbereich den Hindernisüberwachungsbereich umfasst;
ein Vorverarbeitungsmodul, das dazu eingerichtet ist, durch die Zielkamera erfasste Videodaten vorzuverarbeiten, um Zielvideodaten zu erhalten;
ein Bildbestimmungsmodul, das dazu eingerichtet ist, einen Zielbildsatz aus den Zielvideodaten zu bestimmen, wobei ein Graustufenänderungs-Referenzwert des Zielbildsatzes kleiner als ein Graustufenänderungs-Schwellenwert ist, wobei der Graustufenänderungs-Referenzwert des Zielbildsatzes basierend auf Graustufenänderungs-Quantisierungswerten aller zwei benachbarten Bildframes, die in dem Satz enthalten sind, berechnet wird, und wobei der Graustufenänderungs-Quantisierungswert der zwei benachbarten Bildframes basierend auf einer Graustufenänderung zwischen Frames des Hintergrundbereichs bestimmt wird, und je größer die Graustufenänderung ist, desto größer ist der entsprechende Graustufenänderungs-Quantisierungswert;
ein Standardwertberechnungsmodul, das dazu eingerichtet ist, zielend auf jeden Bildpunkt des Hindernisüberwachungsbereichs einen Graustufen-Durchschnittswert desselben Bildpunkts in dem Zielbildsatz als einen Graustufen-Standardwert des Bildpunkts zu nehmen; und
ein Hinderniserkennungsmodul, das dazu eingerichtet ist, ein Hinderniserkennungsergebnis in dem Hindernisüberwachungsbereich gemäß einer Differenz zwischen Graustufenwerten aller Bildpunkte in dem Hindernisüberwachungsbereich in den nachfolgenden Bildern des Zielbildsatzes und entsprechenden Graustufen-Standardwerten auszugeben;
wobei das Hinderniserkennungsmodul dazu eingerichtet ist,
L aufeinanderfolgende Bildframes aus den nachfolgenden Bildern des Zielbildsatzes zu erhalten;
einen ersten Differenz-Referenzwert der L Bildframes gemäß einem zweiten Formelsatz zu berechnen, wobei der zweite Formelsatz ist: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
wobei *fₖ*(*i, j*) der Graustufenwert des Bildpunkts *(i,j)* in dem k-ten Bildframe ist, *R*(*i, j*) der Graustufen-Standardwert des Bildpunkts *(i,j)* ist, *T_{b}* ein Graustufendifferenz-Schwellenwert zwischen dem Graustufenwert und dem Graustufen-Standardwert desselben Bildpunkts in dem Hindernisüberwachungsbereich ist, *Bₖ*(*i, j)* ein zweidimensionaler Graustufendifferenzwert des Bildpunkts *(i,j)* in dem k-ten Bildframe basierend auf *T_{b}* ist, d der Hindernisüberwachungsbereich ist, *Bₖ* eine Summe der zweidimensionalen Graustufendifferenzwerte aller Bildpunkte in dem Hindernisüberwachungsbereich des k-ten Bildframes ist, und B ein erster Differenz-Referenzwert ist;
zu bestimmen, dass kein Hindernis in dem Hindernisüberwachungsbereich vorhanden ist, wenn der erste Differenz-Referenzwert der L Bildframes kleiner als ein erster Differenz-Schwellenwert ist; und
zu bestimmen, dass ein Hindernis in dem Hindernisüberwachungsbereich vorhanden ist, wenn der erste Differenz-Referenzwert der L Bildframes größer als oder gleich dem ersten Differenz-Schwellenwert ist;
wobei das Standardwertberechnungsmodul ferner dazu eingerichtet ist,
zielend auf jeden Bildpunkt in dem Hintergrundbereich außer dem Hindernisüberwachungsbereich den Graustufen-Durchschnittswert desselben Bildpunkts in den N Bildframes als den Graustufen-Standardwert des Bildpunkts zu nehmen;
wobei die Vorrichtung zur Überwachung eines Blindbereichs beim Fahren ferner ein Aktualisierungsmodul umfasst, das dazu eingerichtet ist,
einen zweiten Differenz-Referenzwert der L Bildframes gemäß einem dritten Formelsatz zu berechnen, wobei der dritte Formelsatz ist: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
wobei *fₖ*(*i, j*) der Graustufenwert des Bildpunkts *(i,j)* in dem k-ten Bildframe ist, *R*(*i, j*) der Graustufen-Standardwert des Bildpunkts *(i,j)* ist, *T_{L}* der Graustufendifferenz-Schwellenwert zwischen dem Graustufenwert und dem Graustufen-Standardwert desselben Bildpunkts in dem Hintergrundbereich ist, *Cₖ*(*i, j*) der zweidimensionale Graustufendifferenzwert des Bildpunkts (i,j) in dem k-ten Bildframe basierend auf *T_{L}* ist, D der Hintergrundbereich ist, *Cₖ* die Summe der zweidimensionalen Graustufendifferenzwerte aller Bildpunkte in dem Hintergrundbereich des k-ten Bildframes ist, und C ein zweiter Differenz-Referenzwert ist;
wenn der zweite Differenz-Referenzwert der L Bildframes größer als oder gleich einem zweiten Differenz-Schwellenwert ist, einen ersten Frames der L Bildframes als einen Startframe zu nehmen, N aufeinanderfolgende Bildframes aus den Zielvideodaten zu erhalten und den Graustufenänderungs-Referenzwert der N Bildframes zu berechnen, wobei N gleich der Anzahl der Bildframes in dem Zielbildsatz ist; und
wenn der Graustufenänderungs-Referenzwert der N Bildframes kleiner als der Graustufenänderungs-Schwellenwert ist, die N Bildframes als einen neuen Zielbildsatz zu nehmen und den Graustufen-Standardwert basierend auf dem neuen Zielbildsatz zu aktualisieren.

7. Eine Vorrichtung zur Überwachung eines Blindbereichs beim Fahren, umfassend: einen Prozessor, einen Speicher und ein Programm zur Überwachung eines Blindbereichs beim Fahren, das auf dem Speicher gespeichert ist und von dem Prozessor ausgeführt werden kann, wobei, wenn das Programm zur Überwachung eines Blindbereichs beim Fahren von dem Prozessor ausgeführt wird, die Schritte des Verfahrens zur Überwachung eines Blindbereichs beim Fahren nach einem der Ansprüche 1 bis 5 realisiert werden.

8. Ein lesbares Speichermedium, umfassend: ein Programm zur Überwachung eines Blindbereichs beim Fahren, das auf dem lesbaren Speichermedium gespeichert ist, wobei, wenn das Programm zur Überwachung eines Blindbereichs beim Fahren von einem Prozessor ausgeführt wird, die Schritte des Verfahrens zur Überwachung eines Blindbereichs beim Fahren nach einem der Ansprüche 1 bis 5 realisiert werden.

## Revendications

1. Procédé de surveillance des angles morts lors de la conduite, comprenant les étapes suivantes:
déterminer une zone d'arrière-plan et une zone de surveillance des obstacles à partir d'une image capturée par une caméra cible, la zone d'arrière-plan comprenant la zone de surveillance des obstacles;
prétraiter les données vidéo collectées par la caméra cible afin d'obtenir des données vidéo cibles;
déterminer un ensemble d'images cibles à partir des données vidéo cibles, dans lequel une valeur de référence de variation de niveaux de gris de l'ensemble d'images cibles est inférieure à une valeur seuil de variation de niveaux de gris, la valeur de référence de variation de niveaux de gris de l'ensemble d'images cibles étant calculée sur la base des valeurs de quantification de variation de niveaux de gris de toutes les paires d'images adjacentes comprises dans l'ensemble, et la valeur de quantification de variation de niveaux de gris des paires d'images adjacentes étant déterminée sur la base de la variation de niveaux de gris d'une image à l'autre dans la zone d'arrière-plan, la variation de niveaux de gris étant d'autant plus grande que la valeur de quantification de variation de niveaux de gris correspondante est élevée;
en ciblant chaque pixel de la zone de surveillance des obstacles, en prenant la valeur moyenne de niveau de gris du même pixel dans l'ensemble d'images cible comme valeur de référence de niveau de gris de ce pixel; et
fournir un résultat de reconnaissance d'obstacle dans la zone de surveillance des obstacles en fonction d'une différence entre les valeurs de niveaux de gris de tous les points de pixels de la zone de surveillance des obstacles dans les images suivantes de l'ensemble d'images cible et les valeurs de référence de niveaux de gris correspondantes;
dans lequel l'étape consistant à fournir un résultat de reconnaissance d'obstacle dans la zone de surveillance des obstacles en fonction d'une différence entre les valeurs de niveaux de gris de tous les points de pixels de la zone de surveillance des obstacles dans les images suivantes de l'ensemble d'images cibles et les valeurs de référence de niveaux de gris correspondantes comprend:
l'obtention de L images consécutives à partir des images suivantes de l'ensemble d'images cible;
le calcul d'une première valeur de référence de différence des L images selon un deuxième ensemble de formules, le deuxième ensemble de formules étant: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j)* est la valeur de niveau de gris du point de pixel(*i, j*) dans la k-ième image, *R*(*i, j*) est la valeur de niveau de gris de référence du point de pixel (*i, j*)*, T_{b}* est une valeur seuil de différence de niveau de gris entre la valeur de niveau de gris et la valeur de niveau de gris de référence du même point de pixel dans la zone de surveillance des obstacles, *Bₖ*(*i,* j) est une valeur bidimensionnelle de différence de niveau de gris du point de pixel (*i, j*) dans la k-ième image sur la base de *T_{b},* d désigne la zone de surveillance des obstacles, *Bₖ* représente la somme des valeurs bidimensionnelles de différence de niveaux de gris de tous les points de pixel situés dans la zone de surveillance des obstacles de l'image de la k-ième trame, et B est une première valeur de référence de différence;
déterminer qu'il n'y a pas d'obstacle dans la zone de surveillance des obstacles si la valeur de référence de première différence des L images est inférieure à une première valeur seuil de différence; et
déterminer qu'il y a un obstacle dans la zone de surveillance des obstacles si la valeur de référence de première différence des L images est supérieure ou égale au seuil de première différence;
dans lequel, après l'étape consistant à déterminer un ensemble d'images cibles à partir des données vidéo cibles, il comprend en outre:
cibler chaque point de pixel de la zone d'arrière-plan, à l'exception de la zone de surveillance des obstacles, en prenant la valeur moyenne en niveaux de gris du même point de pixel dans les N images comme valeur standard en niveaux de gris de ce point de pixel;
après l'étape consistant à déterminer qu'il n'y a pas d'obstacle dans la zone de surveillance des obstacles, comprenant en outre:
le calcul d'une deuxième valeur de référence de différence des L images selon un troisième ensemble de formules, le troisième ensemble de formules étant: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
*fₖ*(*i, j*) est la valeur de niveau de gris du point de pixel *(i,j)* dans l'image de la k-ième image, *R(i,j)* est la valeur de référence de niveau de gris du point de pixel *(i,j), T_{L}* est la valeur seuil de différence de niveau de gris entre la valeur de niveau de gris et la valeur de référence de niveau de gris du même point de pixel dans la zone d'arrière-plan, *Cₖ*(*i, j*) est la valeur bidimensionnelle de différence de niveau de gris du point de pixel (i,j) dans l'image de la k-ième image sur la base de *T_{L},* D représente la zone d'arrière-plan, *Cₖ* correspond à la somme des valeurs bidimensionnelles de différence de niveaux de gris de tous les points de pixel de la zone d'arrière-plan de la k-ième image, et C est une deuxième valeur de référence de différence;
si la valeur de référence de la seconde différence des L images est supérieure ou égale à une valeur seuil de seconde différence, prendre une première image parmi les L images comme image de départ, obtenir N images consécutives à partir des données vidéo du cible, et calculer la valeur de référence de variation de niveau de gris des N images, où N est égal au nombre d'images de l'ensemble d'images cible; et
si la valeur de référence de variation de niveau de gris des N images est inférieure à la valeur seuil de variation du niveau de gris, prendre les N images comme nouvel ensemble d'images cible, et mettre à jour la valeur standard du niveau de gris sur la base du nouvel ensemble d'images cible.

2. Procédé de surveillance des angles morts de conduite selon la revendication 1, dans lequel l'étape consistant à déterminer un ensemble d'images cibles à partir des données vidéo cibles comprend:
l'obtention de N images consécutives à partir des données vidéo cibles,
le calcul de la valeur de référence de variation de niveau de gris des N images selon un premier ensemble de formules, le premier ensemble de formules étant: ${A}_{k} \left(i, j\right) = \left\{\begin{matrix}0 , \left|{f}_{k}\left(i, j\right)-{f}_{k - 1}\left(i, j\right)\right| < {T}_{f} \\ 1 , \left|{f}_{k}\left(i, j\right)-{f}_{k - 1}\left(i, j\right)\right| \geq {T}_{f}\end{matrix}\right.$ ${A}_{k} = {\sum }_{D} {A}_{k} \left(i, j\right)$ $A = \frac{1}{N - 1} {\sum }_{k = 2}^{N} {A}_{k}$
*fₖ*(*i, j*) est la valeur en niveaux de gris du point de pixel( *i, j*) dans la k-ième image, *T_{f}* est une valeur seuil de différence en niveaux de gris du même point de pixel dans la zone d'arrière-plan de deux images adjacentes, *Aₖ*(*i, j*) est une valeur bidimensionnelle de différence en niveaux de gris du point de pixel (i,j) entre la k-ième image et la (k-l)-ième image, D représente la zone d'arrière-plan, *Aₖ* est la valeur de quantification de la variation de niveaux de gris entre la k-ième image et la (k-l)-ième image, et A est la valeur de référence de la variation de niveaux de gris; et
déterminer les N images comme ensemble d'images cibles si la valeur de référence de variation de niveau de gris des N images est inférieure à la valeur seuil de variation de niveau de gris.

3. Procédé de surveillance des angles morts de conduite selon la revendication 1, dans lequel, après l'étape consistant à cibler chaque point de pixel de la zone de surveillance des obstacles, en prenant une valeur moyenne de niveau de gris du même point de pixel dans l'ensemble d'images cibles comme valeur standard de niveau de gris du point de pixel, il comprend en outre:
l'obtention de N images consécutives à partir des données vidéo cibles à intervalles réguliers selon un cycle de mise à jour, et le calcul de la valeur de référence de variation de niveaux de gris des N images, N étant égal au nombre d'images de l'ensemble d'images cible; et
si la valeur de référence de variation de niveaux de gris des N images est inférieure à la valeur seuil de variation de niveaux de gris, considérer les N images comme un nouvel ensemble d'images cibles, et mettre à jour la valeur de référence de niveaux de gris sur la base du nouvel ensemble d'images cibles.

4. Procédé de surveillance des angles morts de conduite selon l'une quelconque des revendications 1 à 3, dans lequel, avant l'étape consistant à déterminer une zone d'arrière-plan et une zone de surveillance des obstacles à partir d'une zone filmée par une caméra cible, il comprend en outre:
la détermination d'une voie sur laquelle se trouve un véhicule sur la base d'un système de positionnement du véhicule et d'une carte de haute précision; et
s'il existe une voie adjacente sur le côté gauche et/ou droit de la voie où se trouve le véhicule, prendre la caméra située du côté correspondant du véhicule comme caméra cible.

5. Procédé de surveillance des angles morts de conduite selon la revendication 4, dans lequel la zone d'arrière-plan comprend toutes les zones praticables dans la zone filmée par la caméra cible, et la zone de surveillance des obstacles est située dans la zone de la voie adjacente correspondant à la caméra cible.

6. Dispositif de surveillance des angles morts de conduite, comprenant:
un module de détermination de zone, qui est configuré pour déterminer une zone d'arrière-plan et une zone de surveillance des obstacles à partir d'une zone filmée par une caméra cible, dans lequel la zone d'arrière-plan comprend la zone de surveillance des obstacles;
un module de prétraitement, configuré pour prétraiter les données vidéo collectées par la caméra cible afin d'obtenir des données vidéo cibles;
un module de détermination d'images, configuré pour déterminer un ensemble d'images cibles à partir des données vidéo cibles, dans lequel une valeur de référence de variation de niveaux de gris de l'ensemble d'images cibles est inférieure à une valeur seuil de variation de niveaux de gris, la valeur de référence de variation de niveaux de gris de l'ensemble d'images cibles est calculée sur la base des valeurs de quantification de variation de niveaux de gris de chacune des deux images adjacentes comprises dans l'ensemble, et la valeur de quantification de variation de niveaux de gris des deux images adjacentes est déterminée sur la base de la variation de niveaux de gris d'une image à l'autre dans la zone d'arrière-plan, la variation de niveaux de gris étant d'autant plus grande que la valeur de quantification de variation de niveaux de gris correspondante est élevée;
un module de calcul de valeur de référence, qui est configuré pour, pour chaque point de pixel de la zone de surveillance des obstacles, prendre une valeur moyenne de niveau de gris du même point de pixel dans l'ensemble d'images cible comme valeur de référence de niveau de gris de ce point de pixel; et
un module de reconnaissance d'obstacles, qui est configuré pour fournir un résultat de reconnaissance d'obstacles dans la zone de surveillance des obstacles en fonction d'une différence entre les valeurs de niveaux de gris de tous les points de pixels de la zone de surveillance des obstacles dans les images suivantes de l'ensemble d'images cibles et les valeurs de référence de niveaux de gris correspondantes;
dans lequel le module de reconnaissance d'obstacles est configuré pour:
obtenir L images consécutives à partir des images suivantes de l'ensemble d'images cible;
calculer une première valeur de référence de différence des L images en fonction d'un deuxième ensemble de formules, le deuxième ensemble de formules étant: ${B}_{k} \left(i, j\right) = \left\{\begin{matrix}0 , \left|{f}_{k}\left(i, j\right)-R\left(i, j\right)\right| < {T}_{b} \\ 1 , \left|{f}_{k}\left(i, j\right)-R\left(i, j\right)\right| \geq {T}_{b}\end{matrix}\right.$ ${B}_{k} = {\sum }_{d} {B}_{k} \left(i, j\right)$ $B = \frac{1}{L} {\sum }_{k = 1}^{L} {B}_{k}$
*fₖ*(*i, j*) est la valeur en niveaux de gris du pixel *(i,j)* dans la k-ième image, *R(i,j)* est la valeur standard en niveaux de gris du pixel *(i,j), T_{b}* est une valeur seuil de différence en niveaux de gris entre la valeur en niveaux de gris et la valeur standard en niveaux de gris du même pixel dans la zone de surveillance des obstacles, *Bₖ*(*i, j*) est une valeur bidimensionnelle de différence en niveaux de gris du pixel (*i, j*) dans la k-ième image sur la base de *T_{b},* d désigne la zone de surveillance des obstacles, *Bₖ* représente la somme des valeurs bidimensionnelles de différence de niveaux de gris de tous les points de pixel situés dans la zone de surveillance des obstacles de l'image de la k-ième trame, et B est une première valeur de référence de différence;
déterminer qu'il n'y a pas d'obstacle dans la zone de surveillance des obstacles si la valeur de référence de première différence des L images est inférieure à une première valeur seuil de différence; et
déterminer qu'il y a un obstacle dans la zone de surveillance des obstacles si la valeur de référence de première différence des L images est supérieure ou égale au seuil de première différence;
dans lequel le module de calcul de la valeur standard est en outre configuré pour:
cibler à chaque point de pixel de la zone d'arrière-plan, à l'exception de la zone de surveillance des obstacles, prendre la valeur moyenne en niveaux de gris du même point de pixel dans les N images comme valeur de référence en niveaux de gris de ce point de pixel;
le dispositif de surveillance des angles morts de conduit comprend en outre un module de mise à jour, qui est configuré pour:
calculer une deuxième valeur de référence de différence des L images selon un troisième ensemble de formules, le troisième ensemble de formules étant: ${C}_{k} \left(i, j\right) = \left\{\begin{matrix}0 , \left|{f}_{k}\left(i, j\right)-R\left(i, j\right)\right| < {T}_{L} \\ 1 , \left|{f}_{k}\left(i, j\right)-R\left(i, j\right)\right| \geq {T}_{L}\end{matrix}\right.$ ${C}_{k} = {\sum }_{D} {C}_{k} \left(i, j\right)$ $C = \frac{1}{L} {\sum }_{k = 1}^{L} {C}_{k}$
*fₖ*(*i,j*) est la valeur en niveaux de gris du point de pixel( *i, j*) dans l'image de la k-ième image, *R* (*i,j*) est la valeur standard en niveaux de gris du point de pixel (*i,j*)*, T_{L}* est la valeur seuil de différence d' en niveaux de gris entre la valeur en niveaux de gris et la valeur standard en niveaux de gris du même point de pixel dans la zone d'arrière-plan, *Cₖ*(*i,j)* est la valeur bidimensionnelle de différence en niveaux de gris du point de pixel (*i*,*j*) dans l'image de la k-ième trame sur la base de *T_{L},* D représente la zone d'arrière-plan, *Cₖ* correspond à la somme des valeurs bidimensionnelles de différence de niveaux de gris de tous les points de pixel de la zone d'arrière-plan de la k-ième image, et C est une deuxième valeur de référence de différence;
si la valeur de référence de la seconde différence des L images est supérieure ou égale à une valeur seuil de seconde différence, prendre une première image parmi les L images comme image de départ, obtenir N images consécutives à partir des données vidéo cibles, et calculer la valeur de référence de variation de niveau de gris des N images, où N est égal au nombre d'images dans l'ensemble d'images cible; et
si la valeur de référence de variation de l'échelle de gris des N images est inférieure à la valeur seuil de variation de l'échelle de gris, prendre les N images comme nouvel ensemble d'images cible, et mettre à jour la valeur standard de niveaux de gris sur la base du nouvel ensemble d'images cible.

7. Dispositif de surveillance des angles morts lors de la conduite, comprenant: un processeur, une mémoire, et un programme de surveillance des angles morts de conduite qui est stocké dans la mémoire et peut être exécuté par le processeur, dans lequel, lorsque le programme de surveillance des angles morts de conduite est exécuté par le processeur, les étapes du procédé de surveillance des angles morts de conduite selon l'une quelconque des revendications 1 à 5 sont mises en œuvre.

8. Support de stockage lisible, comprenant: un programme de surveillance des angles morts de conduite stocké sur le support de stockage lisible, dans lequel, lorsque le programme de surveillance des angles morts de conduite est exécuté par un processeur, les étapes du procédé de surveillance des angles morts de conduite selon l'une quelconque des revendications 1 à 5 sont mises en œuvre.
